# EUROPEAN PATENT APPLICATION

(11) **EP 4 653 276 A1**
(43) Date of publication of application: **26.11.2025**
(21) Application number: 24177253.2
(22) Date of filing: 22.05.2024
(51) Int. Cl.: B60W 10/08, B60W 30/04, B60W 30/045

(54) **CONTROL LIMITS FOR VEHICLE COMBINATION UNITS**

(71) Applicant: VOLVO TRUCK CORPORATION, 405 08 Göteborg (SE)
(72) Inventor: ERDINC, Umur, 413 26 GÖTEBORG (SE); LAINE, Leo, 414 84 GÖTEBORG (SE); SADEGHI KATI, Maliheh, 433 51 ÖJERSJÖ (SE); OSCARSSON, Christian, 444 47 STENUNGSUND (SE)
(74) Representative: Ström & Gulliksson AB

(57) **Abstract**

A computer system comprising processing circuitry configured to: acquire a longitudinal velocity of a vehicle combination comprising a tractor unit and at least one trailing unit; and determine an upper limit and/or a lower limit for a control parameter for at least one unit of the vehicle combination based on the acquired longitudinal velocity; and transmit the upper and/or lower limit to a controller of the at least one unit of the vehicle combination. A corresponding computer-implemented method is also disclosed.

## Description

### TECHNICAL FIELD

The disclosure relates generally to vehicle control. In particular aspects, the disclosure relates to control limits for vehicle combination units. The disclosure can be applied in heavy-duty vehicles, such as trucks, buses, and construction equipment. In particular, the disclosure can be applied in multi-unit vehicle combinations with distributed propulsion and energy storage. Although the disclosure may be described with respect to a particular vehicle, the disclosure is not restricted to any particular vehicle.

### BACKGROUND

In vehicle motion management, control of multi-unit vehicle combinations is challenging due to the complexity of coordinating and manoeuvring multiple vehicle units together. Unlike single vehicles, these vehicle combinations require careful consideration of each vehicle unit's dynamic and the interaction between them. These multi-unit configurations often exhibit complex interactions, such as inter-vehicle communication, varying states, and dynamic behaviours. Hence, there is a need for an advanced approach to ensure safe and precise control for multi-unit vehicle combinations.

It is therefore desired to develop a solution for vehicle motion management that addresses or at least mitigates some of these issues.

### SUMMARY

This disclosure provides systems, methods and other approaches for controlling motion of a vehicle combination. In particular, a longitudinal velocity of the vehicle combination is acquired. Based on the acquired longitudinal velocity, respective upper and lower limits for a control parameter for each unit of the vehicle combination are determined. In this way, control of the vehicle combination is provided on a unit-level, which enables safe and precise control for multi-unit vehicle combinations. For example, different limits can be set for different units, enabling enhanced control such as stretch braking and roll-over prevention, and allowing different side slip angles of different units to be taken into account.

According to a first aspect of the disclosure, there is provided a computer system comprising processing circuitry configured to acquire a longitudinal velocity of a vehicle combination, determine an upper limit and/or a lower limit for a control parameter for at least one unit of the vehicle combination based on the acquired longitudinal velocity, and transmit the upper and/or lower limit to a controller of the at least one unit of the vehicle combination.

The first aspect of the disclosure may seek to provide a control system for a vehicle combination that enables different limits to be set for different units, which may be advantageous in some particular scenarios. For example, by setting different limits for different units, enhanced control such as stretch braking and roll-over prevention is enabled, and different side slip angles of different units may be taken into account. This helps to ensure safe and precise control for multi-unit vehicle combinations.

Optionally in some examples, including in at least one preferred example, the acquired longitudinal velocity is the longitudinal velocity of the tractor unit of the vehicle combination. A technical benefit may include that different units can be controlled relative to the longitudinal velocity of the tractor unit, enabling instabilities such as rollover and jack-knife to be prevented.

Optionally in some examples, including in at least one preferred example, the control parameter comprises a longitudinal slip associated with the at least one unit, a longitudinal velocity associated with the at least one unit, and/or a rotational speed of an electrical machine associated with the at least one unit. A technical benefit may include that the units of the vehicle combination can be controlled in a number different ways, ensuring safe and precise control.

Optionally in some examples, including in at least one preferred example, the processing circuitry is configured to determine the upper and/or lower limit based on a roll-over prevention operation for the vehicle combination. A technical benefit may include that limits can be specifically set to avoid roll-over, ensuring safe control of the vehicle combination.

Optionally in some examples, including in at least one preferred example, the processing circuitry is configured to determine the upper and/or lower limit based on a stretch braking operation for the vehicle combination. A technical benefit may include that limits can be specifically set to enable stretch braking, ensuring enabling increased stability and smoother control of the vehicle combination.

Optionally in some examples, including in at least one preferred example, the control parameter comprises a longitudinal velocity associated with the at least one unit, and an upper limit for longitudinal velocity is lower than the acquired longitudinal velocity. A technical benefit may include that stretch braking is enabled and jack-knifing may be avoided.

Optionally in some examples, including in at least one preferred example, the processing circuitry is configured to determine the upper and/or lower limit based on a side slip angle of the at least one unit. A technical benefit may include that, in the case that different units have different side slip angles, a unit exhibiting higher side slip should can be controlled in a tighter manner.

Optionally in some examples, including in at least one preferred example, the processing circuitry is further configured to receive an upper and/or lower capability for the control parameter for the at least one unit of the vehicle combination from the controller of the at least one unit, and determine the upper limit and/or lower limit for the control parameter for the at least one unit of the vehicle combination based on the received capability. A technical benefit may include that the limits that are provided to the unit controller are achievable by the unit, ensuring that the intended vehicle behaviour can be realised.

Optionally in some examples, including in at least one preferred example, the processing circuitry is further configured to receive a measured longitudinal velocity for the at least one unit of the vehicle combination from the controller of the at least one unit. A technical benefit may include that the computer system may be informed of current vehicle behaviour to enable future limits to be set accordingly.

Optionally in some examples, including in at least one preferred example, the processing circuitry is further configured to receive a previously set upper and/or lower limit for the control parameter from the controller of the at least one unit. A technical benefit may include that the computer system may be informed if the limits that were previously transmitted were in fact implemented by the unit controller, enabling any associated issues to be handled accordingly.

Optionally in some examples, including in at least one preferred example, the controller of the at least one unit of the vehicle combination is configured to transmit an upper and/or lower limit for an actuator control parameter to one or more actuators of the at least one unit based on the upper and/or lower limit for the control parameter of the unit. A technical benefit may include that different limits may be provided to different actuators of the vehicle combination, enabling the unit limits to be implemented in any suitable way.

According to a second aspect of the disclosure, there is provided a vehicle comprising the computer system of any preceding claim. The second aspect of the disclosure may seek to provide a vehicle capable of setting different limits for different units, which may be advantageous in some particular scenarios. This helps to ensure safe and precise control for multi-unit vehicle combinations.

According to a third aspect of the disclosure, there is provided a computer-implemented method comprising acquiring, by processing circuitry of a computer system, a longitudinal velocity of a vehicle combination, determining, by the processing circuitry, an upper limit and/or a lower limit for a control parameter for at least one unit of the vehicle combination based on the acquired longitudinal velocity, and transmitting, by the processing circuitry, the upper and/or lower limit to a controller of the at least one unit.

The third aspect of the disclosure may seek to provide a computer-implemented method that enables different limits to be set for different units, which may be advantageous in some particular scenarios. This helps to ensure safe and precise control for multi-unit vehicle combinations.

According to a fourth aspect of the disclosure, there is provided a computer program product comprising program code for performing, when executed by processing circuitry, the computer-implemented method. The fourth aspect of the disclosure may seek to enable new vehicles and/or legacy vehicles to be conveniently configured, by software installation/update, to set different limits for different units, which may be advantageous in some particular scenarios. This helps to ensure safe and precise control for multi-unit vehicle combinations.

According to a fifth aspect of the disclosure, there is provided a non-transitory computer-readable storage medium comprising instructions, which when executed by processing circuitry, cause the processing circuitry to perform the computer-implemented method. The fifth aspect of the disclosure may seek to enable new vehicles and/or legacy vehicles to be conveniently configured, by software installation/update, to set different limits for different units, which may be advantageous in some particular scenarios. This helps to ensure safe and precise control for multi-unit vehicle combinations.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** schematically shows a side view of a vehicle combination according to an example of the disclosure.
**FIG. 1B** schematically shows a top view of a vehicle combination according to an example of the disclosure.
**FIG. 2** schematically shows, in terms of functional blocks, a control system for a vehicle according to an example of the disclosure.
**FIG. 3** schematically shows, in terms of functional blocks, part of the control system according to an example of the disclosure.
**FIG. 4** is a flow chart of a computer-implemented method according to an example of the disclosure.
**FIG. 5** is a schematic diagram of a computer system for implementing examples disclosed herein.

Like reference numerals refer to like elements throughout the description.

### DETAILED DESCRIPTION

The detailed description set forth below provides information and examples of the disclosed technology with sufficient detail to enable those skilled in the art to practice the disclosure.

Control of multi-unit vehicle combinations is challenging due to the complexity of coordinating and manoeuvring multiple vehicle units together. Unlike single vehicles, these vehicle combinations require careful consideration of each vehicle unit's dynamic and the interaction between them. These multi-unit configurations often exhibit complex interactions, such as inter-vehicle communication, varying states, and dynamic behaviours. Hence, there is a need for an advanced approach to ensure safe and precise control for multi-unit vehicle combinations.

To remedy this, systems, methods, and other approaches for controlling motion of a vehicle combination. In particular, a longitudinal velocity of the vehicle combination is acquired. Based on the acquired longitudinal velocity, respective upper and lower limits for a control parameter for each unit of the vehicle combination are determined. In this way, control of the vehicle combination is provided on a unit-level, which enables safe and precise control for multi-unit vehicle combinations. For example, different limits can be set for different units, enabling enhanced control such as stretch braking and roll-over prevention, and allowing different side slip angles of different units to be taken into account.

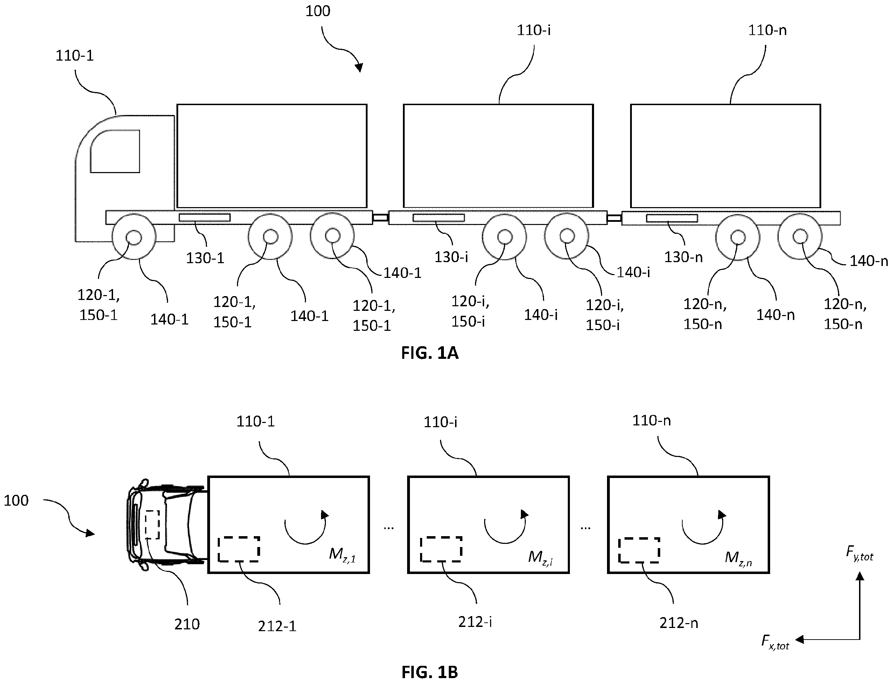

**FIG. 1A** schematically shows a side view of an example vehicle combination **100** of the type considered in this disclosure. The vehicle combination **100** comprises a number of units **110,** including a tractor unit and at least one trailing unit. Each unit **110** may be given an index *i*, and the total number of units **110** in a vehicle combination **100** is designated *n.* Whilst two trailing units are shown, it will be appreciated that the vehicle combination **100** may comprise more or fewer trailing units connected to each other. This gives rise to different types and designations of vehicle combinations.

A tractor unit, such as the tractor unit **110-1,** is generally the foremost unit in a vehicle combination **100,** and may comprise the cabin for the driver, including steering controls, dashboard displays and the like. Generally, the tractor unit **110-1** is used to provide propulsion power for the vehicle combination **100.** In the example of **FIG. 1A****,** the tractor unit **110-1** may also be used to store goods that are being transported by the vehicle combination **100.** A tractor unit may also be referred to as a truck.

A trailing unit, such as the trailing units **110-i, 110-n,** is generally used to store goods that are being transported by the vehicle combination **100.** A trailing unit may be a trailer, dolly and the like. A trailing unit may also provide propulsion to the vehicle combination **100.** A trailing unit without a front axle, such as the trailing units **110-i, 110-n,** is known as a semitrailer. In vehicle combinations such as that shown in **FIG. 1A****,** vehicle motion management is available on a unit level to receive requests from a manual or virtual driver to coordinate the propulsion, braking and steering.

Whilst three tractor axles and two axles per trailer are shown, it will be appreciated that any suitable number of axles may be provide on the respective units **110.** It will also be appreciated that any number of the tractor axles and/or trailer axles may be driven axles, including zero (i.e. one of the units may include at least one driven axle while the other does not).

The vehicle combination **100** may comprise one or more sources or propulsion. For example, one or more of the units **110** may comprise one or more electrical machines **120** such as electric motors. Each unit **110** may comprise one or more batteries **130** configured to provide power to the electrical machines **120.** A vehicle combination **100** that uses only battery power is a battery electric vehicle (BEV). In some examples, for example in the case of a hybrid electric vehicle (HEV), a unit **110,** most often a tractor unit **110-1,** may also include another source of propulsion, for example an internal combustion engine (ICE). The vehicle combination **100** also comprises a drivetrain (not shown) to deliver mechanical power from the propulsion source (the electrical machines **120** or the ICE) to the wheels **140.** All units **110** may provide propulsion to the vehicle combination **100.** In the examples discussed herein, the vehicle combination **100** may be a BEV or an HEV.

The electrical machines **120** are configured to drive, e.g. provide torque and/or steering to, one or more axles or individual wheels **140** of the unit **110.** The electrical machines **120** of a unit **110** can supply either a positive (propulsion) or negative (braking) force. In some examples, electric motors may also be operated as generators, in order for the electric motors to generate braking force when required. The use of electrical machines **120** to supply a negative force is known as regenerative braking. The energy recovered from regenerative braking can be stored in the batteries **130,** and so regenerative braking is generally preferred over using service brakes **150.**

Furthermore, each unit **110** may comprise one or more sets of service brakes **150.** The service brakes **150** of a unit **110** can supply a negative (braking) force. The service brakes **150** may be, for example, frictional brakes such as pneumatic brakes. Pneumatic brakes use a compressor to fill the brake with air, which may be powered by the batteries **130.** In some examples, the brakes may be electro-mechanical brakes or hydraulic brakes.

The vehicle combination **100** may also comprise one or more auxiliary systems (not shown). The auxiliary systems may include auxiliary mechanical systems, such as alternators, power take-off (PTO) systems, and an air compressors, and auxiliary electrical systems, such as steering pumps, headlights, other light systems, ignition systems, audio systems, and air conditioning systems.

The ICE, electrical machines **120** and service brakes **150** are considered as actuators of the vehicle combination **100.** Other actuators may also be present. For example, steering actuators **150,** such as steering servo arrangements, may be provided, and may be implemented as electro-hydraulic actuators. Each actuator in a given unit **110** may be given an index k, and the total number of actuators in a given unit **110** is designated *m.* It will be appreciated that each axle and/or wheel **140** may have an associated electrical machine **130,** set of service brakes **150,** and/or set of steering actuators.

The vehicle combination **100,** or indeed one or more (e.g. each) units **110,** can be considered to comprise two systems: a propulsion system comprising the components that are involved in propulsion of the vehicle combination **100,** and a braking system comprising the components that are involved in braking of the vehicle combination **100.** As such, the propulsion system can be considered to comprise one or more of the ICE, electrical machines **120,** the drivetrain, and batteries **130** of the vehicle combination **100,** while the braking system can be considered to comprise the ICE, the electrical machines **120,** the drivetrain, the batteries **130,** and the service brakes **150.** As such, there is some overlap between the propulsion system and the braking system.

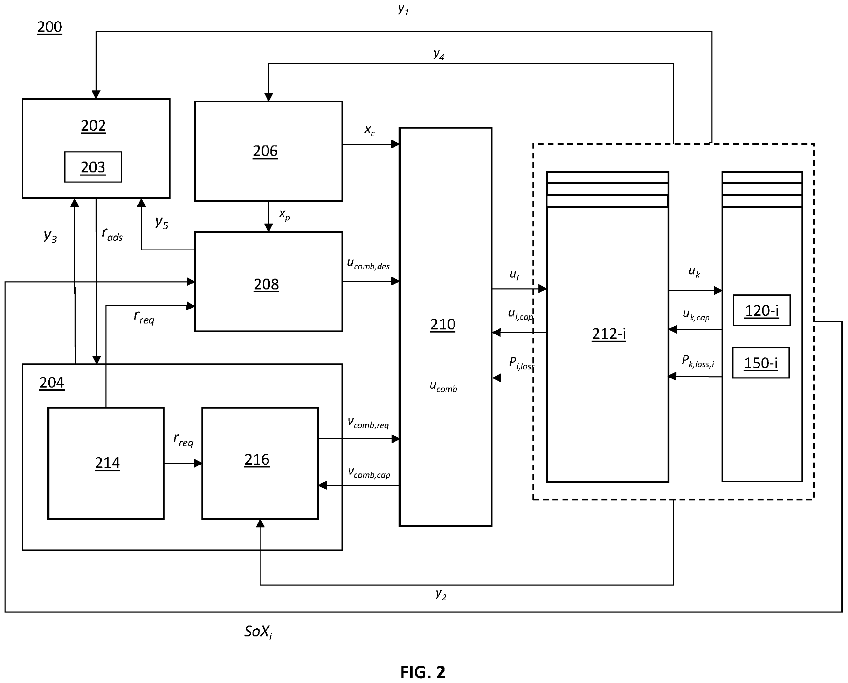

**FIG. 1B** schematically shows a top view of an example vehicle combination **100** of the type considered in this disclosure. Similarly to the example of **FIG. 1A****,** the vehicle combination **100** comprises a number of units **110,** including a tractor unit and a plurality of trailing units. **FIG. 1B** also shows the requested global forces of the vehicle combination **100** as a whole. Examples of requested global forces of the vehicle combination **100** as a whole may e.g. include a total longitudinal/axial force *F_{x.tot}* a total lateral/radial force *F_{y}*,*ₜₒₜ*, and/or one or more yaw moments *M*_{*z*,*i*} for the respective vehicle units **110.** In order to control motion of a vehicle combination **100,** the requested global forces of the vehicle combination **100** must be determined and resolved. This may be achieved by a control system **200** (shown in **FIG. 2****)** of the vehicle combination **100** that determines control signals based on a requested reference input and certain operating conditions of the vehicle combination **100.**

In the example of **FIG. 1B****,** the vehicle combination **100** includes a combination control allocator **210** and a plurality of unit control allocators **212.** The combination control allocator **210** and the various unit specific control allocators **212** together form a distributed control allocation system for the vehicle combination **100.** In this system, the control allocation may be performed on multiple levels, i.e. first on a level of the vehicle combination **100** as a whole, and then on a level of each vehicle unit **110** individually. The combination control allocator **210** may be provided (as shown) as part of the tractor unit **110-1,** while the unit control allocators **212** are provided as part of each individual unit **110.** It will be appreciated that the combination control allocator **210** may be provided as part of any unit **110** of the vehicle combination **100.**

**FIG. 2** schematically shows, in terms of functional blocks, an example control system **200** for a vehicle, such as the vehicle combination **100.** The control system **200** serves to perform various functions of the vehicle combination **100,** such as power management and motion coordination. The control system **200** comprises a tactical layer **202,** a target generator **204,** a state estimator **206,** an energy manager **208,** a combination control allocator **210** and a plurality of unit control allocators **212.** The combination of the target generator **204,** the state estimator **206,** and the energy manager **208,** may be referred to as a vehicle motion controller (VMC) of the vehicle combination **100.** The various modules may e.g. be implemented as code running on a processing circuitry, or similar. The various modules may comprise processing circuitry configured to implement various operations disclosed below. The various modules may include a memory storing instructions that, when executed by the processing circuitry, cause the processing circuitry to perform the various operations. The various modules may be communicatively connected or connectable to each other, for example as known in the art.

The tactical layer **202** is responsible for ensuring that the trajectory for the whole combination **100** is obstacle free and collision free. The tactical layer **202** may also be referred to as an automated driving system (ADS) of the vehicle combination **100.** For example, the tactical layer **202** may determine a trajectory for the vehicle combination **100** that ensures that a swept path of the vehicle combination **100** and the individual units **110** is safe and achievable. To this end, the tactical layer **202** may provide an input *r_{ads}* relating to a manoeuvre in an autonomous driving case. The input *r_{ads}* may include requests such as target distance, velocity, acceleration, and curvature (steering) for the vehicle combination **100.** These may be scalar values or vectors with evolutions for a given prediction horizon. The tactical layer **202** may also send determined future performance limits for the vehicle combination **100.**

The tactical layer **202** may also send requests for power and energy management to optimize range and mission performance. For example, the tactical layer **202** may also include predictive energy management, including battery targets, capabilities and statuses that determine how the energy sources of the vehicle combination **100** should be used for a whole mission. To this end, the tactical layer **202** may receive a model of the power flows of the vehicle combination **100** from the VMC, in particular the energy manager **208,** as will be discussed below.

In some examples, the tactical layer **202** comprises a vehicle model **203.** The vehicle model **203** is a model of the vehicle combination **100** intended to plan trajectories of the vehicle combination **100.** As such, the vehicle model **203** can be used to determine the input *r_{ads}.* The vehicle model **203** may include different parameters of the vehicle combination **100** such as capabilities, structural parameters, and dynamic parameters of the vehicle combination **100,** and be capable of determining the forces acting on the vehicle combination **100.** The vehicle model **203** can be any suitable model, for example a model known in the art. The vehicle model **203** can be based on real tests, computer model simulations, a machine-learning model, or other suitable means known in the art. The vehicle model **203** may be, for example, a single-track model (i.e., left and right wheels on a given axle are considered together), such as a bicycle model. The vehicle model **203** may alternatively be a more complex model such as a dual track model (i.e., left and right wheels on a given axle are considered separately). The real units can have axle groups with several axles, but in the model they may be considered together. A tyre model can be used in combination with the vehicle model **203.** The tyre model may take into account the cornering stiffness of the tyres of the vehicle combination **100.** The vehicle model **203** may be configured to operate within an agreed operational design domain (ODD) and a specified safe operating envelope (SOE) for the vehicle combination **100.** The vehicle model **203** may therefore include vehicle motion management logic that includes capabilities of the vehicle combination **100** and the SOE to avoid instabilities such as rollover, jack-knife, and/or an unsafe swept path width.

The vehicle model **203** may be time-invariant or time variant, based on certain parameters of the vehicle combination **100.** To this end, the tactical layer **202** may receive parameters *y₁* of the vehicle combination **100** from the vehicle combination **100** and/or the individual units **110.** The parameters *y₁* may include capabilities, structural parameters, and/or dynamic parameters of the vehicle combination **100.**

The vehicle capabilities comprise at least one of a maximum range capability, a maximum operational time capability, a longitudinal acceleration minimum, a longitudinal acceleration maximum, a longitudinal acceleration rate minimum, a longitudinal acceleration rate maximum, a longitudinal velocity minimum, a longitudinal velocity maximum, a longitudinal distance minimum, a longitudinal distance maximum, a yaw rate minimum, a yaw rate maximum, a yaw acceleration minimum, a yaw acceleration maximum, a longitudinal velocity maximum for uphill slopes, and a longitudinal velocity maximum values for downhill slopes. While the maximum range capability relates to total distance that the vehicle can travel, the longitudinal distance minimum/maximum refers to a relatively short distance, for example for shunting in a logistic context for moving a vehicle in a yard, or for a safe stop.

In some examples, the capabilities are functions of capability parameters. For example, the longitudinal acceleration minimum and/or the longitudinal acceleration maximum may be a function of one or more of a longitudinal velocity of the vehicle combination **100,** a mass of the vehicle combination **100,** a lateral acceleration of the vehicle combination **100,** a turning radius of the vehicle combination **100,** a longitudinal force provided by the electrical machines **120,** and/or a thermal property of one or more batteries **130.** In some examples, the longitudinal force provided by the electrical machines **120** is a function of thermal properties of the electrical machines **120,** as the power capabilities of the the electrical machines **120,** and consequently the longitudinal force capabilities, will be a function of motor temperature. Similarly, the capability of the batteries **130** depends on thermal properties of the batteries **130.** Furthermore, the thermal properties of the batteries **130** may limit performance of the electrical machines **120** in the case that the battery power limits the electrical machine power and the electrical machines **120** can only provide a certain torque. The vehicle capabilities may also be influenced by a thermal mode requested by the tactical layer **202,** as discussed further below.

The structural parameters of the vehicle combination **100** comprise at least one of a type of the vehicle combination **100,** a number of units **110** of the vehicle combination **100,** a number of axles in each unit **110,** a tyre type in each axle group, a distance of each axle of each unit **110** to the first axle and coupling points of the unit **110,** the number of steered axles in each unit **110,** the number of propelled axles in each unit **110,** the number of liftable axles in each unit **110,** nominal diameters of the wheels **140,** a track of each axle, a mass of the unladen vehicle combination **100,** and a centre of gravity of the unladen vehicle combination **100.** The type of the vehicle combination **100** may be defined by different types of coupling used in the vehicle combination **100.** The tyre type may be defined by a tyre stiffnesses, a peak friction/ slip parameter of the tyre, and/or other parameters used in known tyre models such as the Pacejka Magic Formula or a brush model.

The dynamic parameters of the vehicle combination **100** comprise at least one of a mass of each unit **110,** a load on each axle, an inertia of each unit **110,** a lumped cornering stiffness of each axle, a rolling resistance of each axle, a distance of a dynamic centre of gravity from the first axle of each unit **110,** and an air drag property. The inertia may be expressed in three directions, although the vertical direction is most relevant for trajectory planning as it represents the yaw moment of inertia, which is relevant for the yaw-plane motion of the vehicle combination **100.** The air drag property may include am effective surface of the vehicle combination **100** for different wind directions.

Based on these received parameters *y₁* of the vehicle combination **100,** the vehicle model **203** can be updated to reflect the current state of the vehicle combination **100.** This can be advantageous in autonomous driving of multi-unit vehicle combinations, as it may enable safe and precise trajectory planning, which is not trivial due to the complexity in their dynamics and interactions between units **110.** For instance, an updated vehicle model **203** can enable a swept path of both the vehicle combination **100** and individual units **110** to be maintained within a safe range. Other typical use cases for the vehicle model **203** include overtake situations on uphill for the vehicle combination **100,** where the vehicle model **203** can determine whether the vehicle combination **100** has sufficient motion capabilities for a successful overtake. Additionally, the vehicle model **203** can be applied to assess rough timing, determining how long the vehicle combination **100** can be used.

In some examples, the tactical layer **202** can decide on state of charge (SoC) targets for the batteries **130** of the vehicle combination **100** as a function of distance, in some cases considering slope changes, etc. For example, the tactical layer **202** can request the battery **130** of a unit **110** having a higher SoC be drained for an uphill slope, as it can foresee that batteries **130** of all units **110** can be charged fully with regenerative braking at a following downhill slope. In some examples, an SoC controller (not shown) can calculate weighting factors for SoC targets. In some examples, the tactical layer **202** can send targets for the state of energy rate (SoE) directly to the combination control allocator **210.**

Furthermore, the tactical layer **202** can request the transfer of energy from one unit **110** to another by means of propulsion in one unit **110** and regenerative braking in the other (as explained in WO 2021/180300 A1 in the name of Volvo Truck Corporation). In another example, the tactical layer **202** requests the battery **130** of a unit **110** be drained faster than another based on the number of available chargers in a following charge station or due to equalizing the charging time of all units **110** or minimizing the total charging time at the charging station.

The tactical layer **202** can also be used to select an operating mode (otherwise known as a thermal management mode) for the vehicle combination **100.** A vehicle combination **100** may be capable of operating in a number of different modes dependent on desired performance. It is advantageous to provide smart electric vehicle units that can provide different settings or automatically detect which operating mode is most suitable for durable and/or efficient driving. The tactical layer **202** can select an operating mode based on factors such as current traffic situation, road types, GPS signals, weather conditions, or a vehicle usage preference (a preferred driving scenario for example long distance, short distance usage, etc.). The tactical layer **202** can also select an operating mode based on real time data from the vehicle sensors, or vehicle-to-vehicle/infrastructure communication data. For example, if it is determined that a quick acceleration or high performance is needed based on this data (e.g. due to changes in traffic conditions), the tactical layer **202** can select an operating mode accordingly. The operating modes may include an "Eco" mode or "Range" mode, in which acceleration and top speed of the vehicle combination **100** can be limited to optimise energy efficiency and maximise range, an "Endurance" mode, intended to enable a vehicle combination **100** to operate for a long duration, a "Performance" mode, configured to provide maximum acceleration and top speed, and an "I-know" mode, in which pre-set configurations for the vehicle combination **100** can be adjusted appropriate to desired performance.

The tactical layer **202** can interface with vehicle motion management components of the control system **202,** in particular the target generator **204.** As discussed above, the tactical layer **202** may provide an input *r_{ads}* relating to a manoeuvre to the target generator **204.** In some instances, the input *r_{ads}* may be determined by the vehicle model **203** based on the current parameters *y₁* received from the vehicle combination **100.** This interface ensures that motion in a reference coordinate system can be requested by the tactical layer **202** within the capabilities of the vehicle combination **100** to ensure safe and efficient motion control. This enables fully automated driving with redundancy and vehicle safety.

The purpose of the target generator **204** is to determine a requested reference input *r_{req}* and a requested combination control input *ν_{comb,req}* for the vehicle combination **100.** The requested reference input *r_{req}* is determined based on an input related to a manoeuvre for the vehicle combination **100,** for example the input *r_{ads}* from the vehicle model **203** of the tactical layer **202,** and represents a requested movement of the vehicle combination **100.** The requested combination control input *ν_{comb,req}* can be determined based on the requested reference input *r_{req}* and/or the input *r_{ads}.* The requested combination control input *ν_{comb,req}* can also be determined based on a motion capability *ν*_{*comb*,*cap*} for the vehicle combination **100.** The target generator **204** comprises a path planner/controller **214** and a force generator **216.**

In particular, the target generator **204** may receive an input related to a manoeuvre for the vehicle combination **100.** The manoeuvre may be, for example, straight-line driving, cornering, braking and the like. The target generator **204** may receive data from, for example, a steering wheel and/or gas/brake pedal of the combination **100,** indicating that the driver (or some other system of the vehicle combination **100)** wants to change the direction and/or the speed of the vehicle combination **100** in a certain way. This may be the case in a semi-autonomous driving scenario. In some examples, the input may originate from elsewhere, for example any other system that may provide some indication of how the overall forces of the vehicle combination **100** are to be influenced (e.g. steered, propelled or braked). For example, the data may originate from a lane assist system, a lane following system, an emergency steering system, an emergency braking system, an automated or semi-automated drive system. In one particular example, the target generator **204** may receive the input *r_{ads}* from the vehicle model **203** of the tactical layer **202.** This may be the case in a fully autonomous driving scenario. Based on this input, the target generator **204** may output a requested reference input *r_{req}.* In particular, the path planner/controller **214** determines the requested reference input *r_{req}.* The requested reference input *r_{req}* may comprise at least one of a longitudinal acceleration *aₓ* of the vehicle combination **100** as a whole or of a unit **110** of the vehicle combination **100** (for example the unit **110** comprising the combination control allocator **210),** a longitudinal velocity *νₓₗ* of a tractor unit **110-1,** a lateral velocity *ν_{yl}* of the tractor unit **110-1,** a yaw rate *ω_{zi}* of at least one unit **110** of the vehicle combination **100,** and a steering angle *δ*_{*f*, *req*} of the tractor unit **110-1.** In some examples, the target generator **204** may also receive determined future performance limits for the vehicle combination **100.**

The requested combination control input *ν_{comb,req}* is determined by the force generator **216.** The requested combination control input *ν_{comb,req}* can be determined based on the requested reference input *r_{req}*, or based on the input *r_{ads}* directly. In the latter case, the path planner/controller **214** can be used to determine a requested reference input *r_{req}* for shorter term motion, for example by up-sampling the requests *r_{ads}* from the tactical layer **202** that may be sent infrequently (e.g. every second or so). The requested combination control input *ν_{comb,req}* may include requested motion parameters for the vehicle combination **100.** In particular, the forces *F*_{*tot*,*req*} and/or moments *M*_{*z*,*tot*,*req*} that need to be applied to the vehicle combination **100** as a whole in order to follow the requested reference input *r_{req}* are determined. The requested motion parameters included in the requested combination control input *ν_{comb,req}* of the vehicle combination **100** may comprise at least one of a requested longitudinal force *F*_{*x,tot*,*req*} of the vehicle combination **100,** a requested lateral force *F*_{*y*,*tot*,*req*} of the vehicle combination **100,** a requested longitudinal coupling force *F*_{*cxi*,*req*} between consecutive units **110,** and a requested lateral coupling force *F*_{*cyi*,*req*} between consecutive units **110.** These make up the total requested force to be applied *F*_{*tot*,*req*} for the vehicle combination **100.** The motion parameters included in the requested combination control input *ν_{comb,req}* of the vehicle combination **100** may also comprise a requested yaw moment *M*_{*z*,*t*,*req*} for one or more units **110.**

The requested combination control input *ν_{comb,req}* may also be determined based on state information *y₂* from the different units **110** of the vehicle combination **100** and a motion capability *ν*_{*comb*,*cap*} for the vehicle combination **100.** The state information *y₂* may include information from sensors of the vehicle combination **100** such as wheel speed sensors, inertial measurement units, articulation angle sensors and the like. The motion capability *ν*_{*comb*,*cap*} of the vehicle combination **100** may describe the limits of motion parameters for safe operation of the vehicle combination **100.** The motion capability _{*νcomb*,*cap*} may comprise at least one of a longitudinal force capability *F*_{*x.tot*,*cap*} of the vehicle combination **100,** a lateral force capability *F*_{*y*,*tot*,c*ap*} of the vehicle combination **100,** and a yaw moment capability *M*_{*z*,*i*,*cap*} for one or more units **110.** The state information *y₂* may also include structural parameters of the vehicle combination **100** as discussed above in relation to parameters *y₁*.

The requested combination control input *ν_{comb,req}* may be determined based on a vehicle model. The vehicle model can be any suitable model, for example a model known in the art. The model can be based on real tests, computer model simulations, a machine-learning model, or other suitable means known in the art. The vehicle model may provide motion prediction of the vehicle combination **100** by looking at previous steering input and acceleration input. The prediction may include instabilities such as understeer or rollover risk, for example within a one-second horizon. The model may be, for example, a single-track model, i.e., left and right wheels on a given axle are considered together. The real units can have axle groups with several axles, but in the model they are considered together. A tyre model can be used in combination with the vehicle model. The tyre model may take into account the cornering stiffness of the tyres of the vehicle combination **100.**

The target generator **204** may also be configured to send stability information *y₃* to the tactical layer **202.** The stability information *y₃* may include constraints associated with an SOE of the vehicle combination **100** to avoid instabilities such as rollover, jack-knife, and/or an unsafe swept path width.

The state estimator **206** is responsible for processing state information *y₄* from the different units **110** of the vehicle combination **100.** For example, the state estimator **206** may receive information from sensors of the vehicle combination **100** such as wheel speed sensors, inertial measurement units, articulation angle sensors and the like and use this information to determine states for the vehicle combination **100** and the various units. The state estimator **206** may then output unit-specific state information *xₚ* to the energy manager **208** and unit-specific state information *x_{c}* to the combination control allocator **210.**

The energy manager **208** determines a power split between the different units **110** of the vehicle combination **100.** The energy manager **208** may also determine a power split within each unit **110,** meaning how the power demand is divided between the actuators (for example, the ICE, the electrical machines **120,** service brakes **150,** and/or steering actuators) of the unit **110.** Inputs to the energy manager **208** include the requested reference input *r_{req}* from the target generator **204** and the statuses *SoX* of the batteries **130** of the vehicle combination **100.** The energy manager **208** determines a power allocation and an associated power allocation input *u*_{*comb*,}*_{des}.* The power split may be determined based on the state of energy rate (*SȯE*) for each unit **110** and/or the longitudinal part of the requested force for the unit's propulsion system *F*_{*xpi*,}*_{req}.* The energy manager **208** may consider factors that affect long-term energy consumption, such as road slopes, SoC states, charger locations, and the like, and determine power behaviour as a function of the energy over time. The energy manager **208** may also be configured as a power manger. For example when a time horizon is considered, it may handle energy. When instantaneous values are considered, it may handle power.

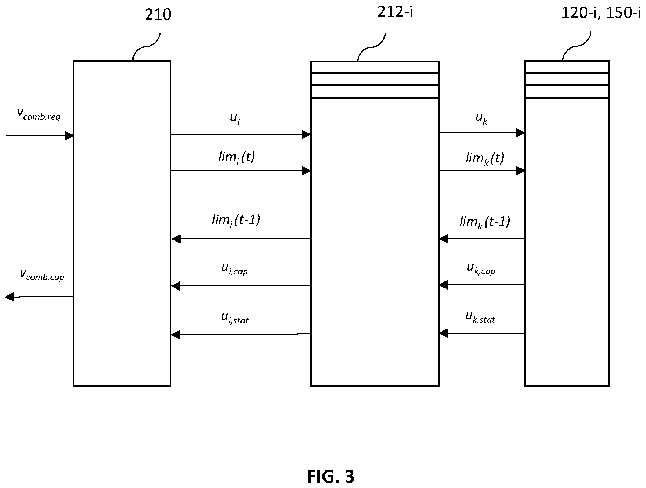

The energy manager **208** may also be configured to send power information *y₅* to the tactical layer **202.** The power information *y₅* may include a representation of the power flows of the vehicle combination **100.** The representation may be determined using a directed graph that represents power flows between the different energy system components of the vehicle combination **100,** such as the electrical machines **120,** batteries **130,** wheels **140,** service brakes **150,** auxiliary mechanical systems, and auxiliary electrical systems. This may then be represented as a matrix, for example an incidence matrix. The power information *y₅* may include capabilities associated with the power flows. In this way, the energy manager **208** may provide a flexible and scalable power flow model of the vehicle combination **100** to the tactical layer **202.** The determination of the representation of the power flows of the vehicle combination **100** will be discussed in more detail in relation to **FIGs. 3** to **5****.** The power information *y₅* may also include structural parameters received from the target generator **204** and statuses *SoX* of the batteries **130.**

Based on these values, the control allocators **210, 212** may determine control data that meets the requested global forces of the vehicle combination **100** to meet certain constraints, such as power management (optimising battery usage) and safety constraints (ensuring that the trajectory for the whole combination **100** is obstacle free and collision free). In particular, the control allocators **210, 212** determine how various actuators (for example, the ICE, the electrical machines **120,** service brakes **150,** and/or steering actuators) of the vehicle combination **100** are to be controlled in order to generate requested global forces of the vehicle combination **100** as a whole. The combination control allocator **210** and the various unit specific control allocators **212** together form a distributed control allocation system for the vehicle combination **100.** In this system, the control allocation is performed on multiple levels, i.e. first on a level of the vehicle combination **100** as a whole, and then on a level of each vehicle unit **110** individually.

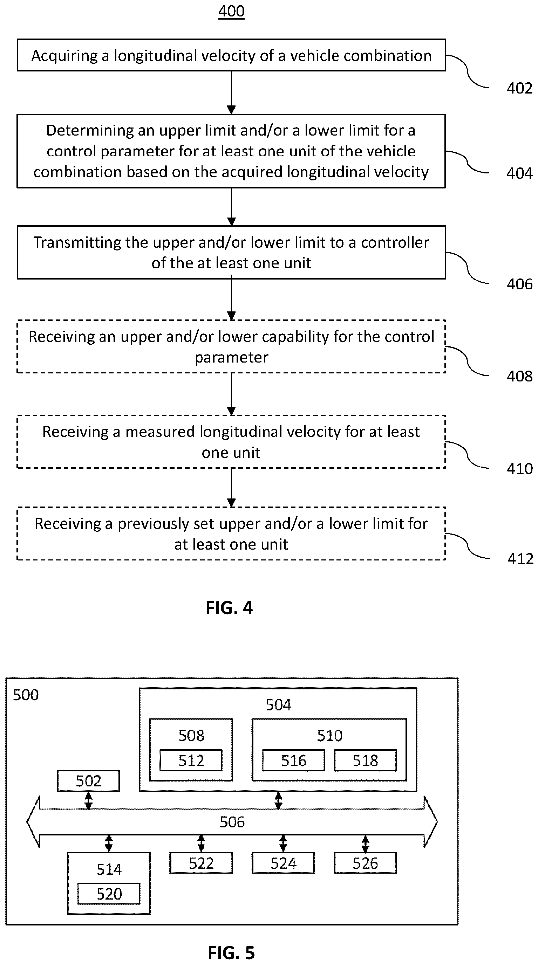

The combination control allocator **210** transforms the requested combination control input *ν_{comb,req}* from the target generator **204** into an allocated combination control input *u_{comb}* for the vehicle combination **100,** describing appropriate motion parameters for each unit **110.** The allocated combination control input *u_{comb}* of the vehicle combination **100** comprises the forces *F* and/or moments *M* to be applied for the vehicle combination **100.** The allocated combination control input *u_{comb}* comprises allocated unit control inputs *uᵢ* describing the forces and/or moments that each respective unit **110** is to produce in order to provide the allocated combination control input *u_{comb}* of the vehicle combination **100.** The allocated unit control inputs *uᵢ* may comprise a force control input for the unit's propulsion system *Fₚᵢ*, and a force control input for the unit's braking system *F_{bi}.* The allocated unit control inputs *uᵢ* are transmitted from the combination control allocator **210** to the respective unit control allocators **212.** In addition, the combination control allocator **210** may also transmit upper and lower limits for a control parameter of a unit **110** to the respective unit control allocators **212,** as will be discussed below in relation to **FIGs. 3** and **4****.**

The unit control allocators **212** comprise a specific control allocator **212** for each unit **110** of the vehicle combination **100.** The unit-specific allocated control inputs *uᵢ* that are output from the combination control allocator **210** are transformed into actuator-specific allocated control inputs *uₖ* by the unit-specific control allocators **212.** The actuator-specific allocated control inputs *uₖ* describe actual commands for the actuators of a unit, for example, the ICE, the electrical machines **120,** service brakes **150,** and/or steering actuators of the unit **110.** For example, the unit-specific control allocators **212** map the forces and moments of each unit **110** into the steering and drive/brake torques to be applied at the wheels of each unit **110.** To do this, the unit control allocators **212** may determine a requested force control input for the unit's propulsion system *Fₚᵢ* and a requested force control input for the unit's braking system *F_{bi}.* The unit control allocators **212** then determine the actuator-specific allocated control inputs *uₖ* accordingly, which comprise allocated force control inputs for the individual actuators of the unit's different systems: *Fₚₖ* for the actuators of the propulsion system, and *F_{bk}* for the actuators of the braking system. The actuator-specific allocated control inputs *uₖ* are transmitted from the respective unit control allocators **212** to the respective actuators of the unit **110.** In addition, the unit control allocators **212** may also transmit upper and lower limits for a control parameter of an actuator to the respective actuator, as will be discussed below in relation to **FIGs. 3** and **4****.**

In some examples, each unit **110** may be capable of estimating its own capabilities *u*_{*i*,*cap*}, e.g. how much and/or how fast the unit **110** can move at a current time instant. The unit capabilities comprise a force capability for its propulsion system *F*_{*pi*,*cap*} and a force capability for its braking system *F*_{*bi*,}*_{cap}.* This may be based on an actuator capability *u*_{*k*,*cap*} for each actuator, e.g. how much and/or how fast the actuator can move at a current time instant. The actuator capabilities comprise a force capability for the actuators *F*_{*pk*,*cap*} during propulsion and a force capability for the actuators *F*_{*bk*,*cap*} during braking. The actuators of each unit **110** may provide an actuator capability *u*_{*k*,*cap*} to the respective unit control allocator **212-i,** which provides a unit capability *u*_{*i*,*cap*} to the combination control allocator **210.** The unit capabilities *u*_{*i*,*cap*} may also comprise capabilities of the power input/output of the batteries **130.** In addition, the unit control allocators **212** may also transmit a status of a control parameter to the combination control allocator **210** and/or a current value of the upper and lower limits for the control parameter of a unit **110.** The status may include a current value of the control parameter, for example received from an actuator. This will be discussed below in relation to **FIGs. 3** and **4****.**

Each unit **110** may also be capable of estimating its own power losses *P*_{*i*,}*ₗₒₛₛ.* The unit power losses *P*_{*i*,*loss*} comprise a power loss for its propulsion system *P*_{*pi*,*loss*} and a power loss for its braking system *P*_{*bi*,}*ₗₒₛₛ.* This may be based on an actuator power losses *P*_{*k*,*loss*,*i*} for each actuator in the unit **110** as well as other power losses in the unit **110,** such as power losses in the batteries and the drivetrain. The actuator power losses *P*_{*k*,*loss*,*i*} comprise a power loss for propulsion actuators *P*_{*pk*,*loss*,*i*} (e.g. electrical machines **120,** ICE, and/or other propulsion sources) and a power loss for braking actuators *P*_{*bk*,*loss*,*i*} (e.g. electrical machines **120** and/or service brakes **150).** The actuators of each unit **110** may provide the actuator power losses *P*_{*k*,*loss*,*i*} to the respective unit control allocator **212-i,** which provides unit power losses *P*_{*i*,*loss*} to the combination control allocator **210.**

**FIG. 3** schematically shows, in terms of functional blocks, part of an example control system for a vehicle, such as the control system **200.** In particular, a combination control allocator **210,** unit control allocators **212,** and actuators of the vehicle (e.g. electrical machines **120** and service brakes **150)** are shown.

As discussed above, the combination control allocator **210** receives the requested combination control input *ν_{comb,req}* and transforms it into allocated unit control inputs *uᵢ* describing the forces and/or moments that each respective unit **110** is to produce. This may be performed based on the unit capabilities *u*_{*i*,*cap*} received from the respective unit control allocators **212.** The allocated unit control inputs *uᵢ* are provided to the unit control allocators **212** and transformed into actuator-specific allocated control inputs *uₖ* by the unit-specific control allocators **212.** This may be performed based on the actuator capabilities *u*_{*k*,*cap*} received from the respective actuators. The actuator capabilities *u*_{*k*,*cap*} and the unit capabilities *u*_{*i*,*cap*} may also be fed back to the VMC as the motion capability *ν*_{*comb*,*cap*} for the vehicle combination **100.**

The actuators may also provide actuator status messages *u*_{*k*,*stat*} to their respective unit control allocators **212.** These may include, for example, an applied brake force for the service brakes **150** (or applied pressure for a pneumatic brake), a wheel speed (for example from wheel speed sensor that may be part of the service brakes **150),** a brake disk temperature, a tyre pressure, a voltage of an electrical machine **120,** a current of an electrical machine **120,** a torque of an electrical machine **120,** a force of an electrical machine **120,** a speed of the actuator, a steering angle of the actuator (in the case of a steering servo arrangement), axle loads (or below pressures), a temperature of an ICE, a torque of an ICE, a speed of an ICE, and the like. The unit control allocators **212** may also provide unit status messages *u*_{*i*,*stat*} to the combination control allocator **210.** These may include, for example, unit a total force of the service brakes **150** of the unit **110,** a total force of the electrical machines **120** of the unit **110,** a speed (longitudinal, lateral) the unit **110,** and the like. In some examples, the unit status messages *u*_{*i*,*stat*} may include a side slip angle of the unit **110,** sensor signals such as yaw rates and accelerations of the unit **110** (for example from inertial measurement units), coupling forces between units **110,** a total axle load of the unit **110,** a position of the centre of gravity (e.g. vertical, longitudinal) of the unit **110,** and the like, which may also be provided from the state estimator **206.** The unit status messages *u*_{*i*,*stat*} may be determined based on the actuator status messages *u*_{*k*,}*ₛₜₐₜ.* For example, a total force of service brakes **150** of the unit **110** may be calculated by taking a sum of the applied brake force for all of the service brakes **150** of the unit **110.** Similarly, a total force of the electrical machines **120** of the unit **110** may be obtained by taking a sum of the force for all of the electrical machines **120** of the unit **110.**

The combination control allocator **210** is also configured to transmit upper and lower limits *limᵢ* for a control parameter of a unit **110** to the respective unit control allocators **212.** These may be provided as requests for implementation by the unit control allocators **212.** The control parameter may be a longitudinal slip associated with a unit **110,** a longitudinal velocity associated with a unit **110,** and/or a rotational speed of an electrical machine **120** associated with a unit **110.** The unit limits *limi* are determined based on a longitudinal velocity of the vehicle combination **100** that may be provided as part of unit status messages *u*_{*i*,*stat*}, as will be discussed below in relation to **FIG. 4****.** The unit limits *limi* may also be determined to be within the unit capabilities *u*_{*i*,}*ₐₚ.*

In some examples, the unit control allocators **212** may use the unit limits *limi* in determining the actuator-specific allocated control inputs *uₖ.* For example, if the unit limits *limᵢ* comprise a longitudinal velocity for a unit **110,** and if in *uₖ* comprises speeds/slips to be input to the actuators, the unit allocator **212** can saturate *uₖ* to be within *limᵢ.* In another example, if *uₖ* comprises only forces for the actuators, the unit allocator **212** can use an inverse tire model to provide wheel force from an input as wheel speed or slip. Then, based on the unit limits *limᵢ* (speed or slip), corresponding maximum and/or minimum wheel forces can be determined, and the unit allocator **212** can saturate *uₖ* accordingly.

The unit control allocators **212** are also configured to transmit upper and lower limits *limₖ* for a control parameter of an actuator to the respective actuators. These may be provided as requests for implementation by the actuators. The actuator control parameters may include, a slip, a speed, a force, and/or a torque associated with an actuator. For example, for an electrical machine **120,** the control parameters may include the speed of the shaft of the electrical machine **120,** the speed of an associated wheel **140,** the slip at an associated wheel **140,** the shaft torque of the electrical machine **120,** the torque of an associated wheel **140,** or the force of an associated wheel **140,** while for service brakes **150,** the control parameters may include the speed of an associated wheel **140,** the slip at an associated wheel **140,** the torque of an associated wheel **140,** or the force of an associated wheel **140,** or a brake pressure.

The actuator limits *limₖ* may be determined based on a value of an actuator control parameter that may be provided as part of actuator status messages *u*_{*k*,}*ₛₜₐₜ.* For example, if an electrical machine **120** is too hot and the vehicle speed is 40 km/h, the minimum speed may be limited to 35 km/h to limit braking and maintain the health of the electrical machine **120.** The actuator limits *limₖ* may also be determined based on the unit limits *limᵢ.* For example, a longitudinal velocity limit of 40 km/h sent from the combination control allocator **210** to the unit control allocator **212** of a unit **110** may correspond to an electrical machine rotational speed limit of 1000 RPM. This may be determined by the unit control allocator **212** based on, for example, wheel radius, gear ratios, etc. In some examples, the unit control allocators **212** may simply forward the unit limits *limᵢ* to the actuators, for example if the combination control allocator **210** sends an electrical machine rotational speed limit to the unit control allocator **212.** The actuator limits *limₖ* may be determined to be within the actuator capabilities *u*_{*k*,}*_{cap}.* For example, if *u*_{*k*,*cap*} specifies a longitudinal velocity capability between 35 km/h and 40 km/h (in a vehicle speed domain), and *limᵢ* specifies a minimum limit of 30 km/h, the unit control allocator **212** may modify that limit such that a minimum limit of 35 km/h is set in *limₖ.* The actuators may then implement the actuator-specific allocated control inputs *uₖ* based on the actuator limits *limₖ.* For example, an electrical machine **120** may receive a requested torque as part of an actuator-specific allocated control input *uₖ* and a maximum velocity for the unit **110** as part of the actuator limits *limₖ*, and resolve the requested torque to not exceed the maximum velocity.

The limits that are actually set by the unit control allocators **212** and the actuators may differ from those that are received from the combination control allocator **210** and the unit control allocators **212** respectively. For example, a unit control allocator **212** may provide more complex control than the combination control allocator **210** to take more variable into consideration. For example, an anti-roll-over function may be applied in a unit control allocator **212.** Therefore, it may be desired that the unit control allocators **212** can override the limits received from the combination control allocator **210.** In another example, the unit control allocators **212** may send requests more frequently than the combination control allocator **210** (e.g. every 100 ms vs every 10 ms), meaning that the unit control allocators **212** may need to handle issues (e.g. safety problems) that arise between combination control allocator **210** requests. Similarly, in the case that an actuator cannot fulfil a request from the combination control allocator **210,** a unit control allocator **212** can be used to fulfil the actuator capabilities.

Therefore, the unit control allocators **212** and the actuators may also be configured to provide values of previously set limits to the previous level of the control system **200.** For example, the actuators may send values of the previously set actuator limits *limₖ* to the unit control allocators **212.** Similarly, the unit control allocators **212** may send values of the previously set unit limits *limᵢ* to the combination control allocator **210.** The unit limits *limᵢ* that are actually set by the unit control allocators **212** may be based on the actuator limits *limₖ* that are actually set by the actuators. These messages are therefore status messages rather than implementation requests. In **FIG. 3****,** these messages are shown as limits *limᵢ(t-1)*, *limₖ(t-1)* at a previous time step to the limits *limᵢ(t)*, *limₖ(t)* provided in a "forward" sense by the combination control allocator **210** and the unit control allocators **212.** This is merely to differentiate between the two signals. It will be appreciated that the limits that are actually set by the unit control allocators **212** and the actuators may be fed back at any suitable time.

**FIG. 4** is a flow chart of a computer-implemented method **400** according to an example. The method **400** is for determining and providing upper and lower limits for a control parameter of one or more units of a vehicle combination, such as the vehicle combination **100.** The method **400** enables different limits to be set for different units, which may be advantageous in some particular scenarios. The method **400** may be implemented by processing circuitry of a computer system (e.g., the combination control allocator **210** of the control system 200 described in relation to **FIGs. 2** and **3****).**

At **402,** a longitudinal velocity of the vehicle combination **100** is acquired. This may be the longitudinal velocity of any or all of the units **110** of the vehicle combination **100,** but in particular examples may be the longitudinal velocity of the tractor unit **110-1.** The longitudinal velocity may be acquired as part of the unit status messages *u*_{*i*,*stat*} received from the unit control allocators **212,** or may be determined in another manner, for example from the state estimator **206.**

At **404,** an upper limit and/or a lower limit *limᵢ* for a control parameter for at least one unit **110** of the vehicle combination **100** is determined. The control parameter may be a longitudinal slip associated with a unit **110,** a longitudinal velocity associated with a unit **110,** and/or a rotational speed of an electrical machine **120** associated with a unit **110.**

The upper and/or lower limit is determined based on the longitudinal velocity acquired at **402.** In particular, the upper and/or lower limit may be determined based on a desired outcome, for example improved stability or efficiency of the vehicle combination **100.** For example, in order to provide a desired outcome, and increase or decrease to the longitudinal velocity of the vehicle combination **100** may be required, meaning that the velocity limits should be set relative to the current longitudinal velocity. Similarly, if it is desired that the velocity limits do not compromise performance of the vehicle combination **100,** then they can be set in a relaxed manner relative to the current longitudinal velocity. If it is desired to control the force of the of the vehicle combination **100,** then the measured velocity and set velocity limits can be used to determine slip limits, which implicitly take the longitudinal velocity into account. This may be achieved using vehicle and tyre models as known in the art.

In one example, the upper and/or lower limit is determined based on a roll-over prevention operation for the vehicle combination **100.** For example, a lower set of limits may be set for the control parameter for a particular trailing unit **110** if it is determined that the unit **110** is about to roll over (e.g. low normal load on the inner wheels or high lateral acceleration of the unit **110).** In particular, an upper limit for longitudinal velocity of the unit **110** may be lower than the longitudinal velocity acquired at **402.** For example, a longitudinal velocity of the unit **110** should be low enough to enable high slip (deep slip) that causes saturation of the tyre forces of the unit **110.** For example, if it is determined that a unit **110** is about to roll over and a longitudinal velocity of 40 km/h is acquired at **402,** an upper limit of 35 km/h and a lower limit of 30 km/h for the longitudinal velocity of the unit **110** may be set, which will eventually lead the unit **110** to brake. Due to braking, the lateral acceleration of the unit **110** and lateral force on the tyres will decrease and roll-over will be avoided.

In another example, the upper and/or lower limit is determined based on a stretch braking operation for the vehicle combination **100.** Stretch braking is applied to avoid yaw instabilities, for example, during downhill motion of the vehicle combination **100** where increased coupling force between a trailing unit and a tractor unit may lead to jack-knifing. In these cases, the longitudinal velocity of the trailing unit should be set lower than that of the tractor unit (or indeed a preceding trailer unit). Therefore, when a potential yaw instability is detected (e.g. low friction, high curvature, and downhill), appropriate speed limits can be set for the trailing unit to cause stretch braking and stabilize the vehicle combination **100.** In particular, an upper limit for longitudinal velocity of the unit **110** may be lower than the longitudinal velocity acquired at **402.** For example, if a longitudinal velocity of 40 km/h is acquired at **402,** an upper limit of 42 km/h and a lower limit of 38 km/h for the longitudinal velocity of the tractor unit **110-1** may be set, while an upper limit of 36 km/h and a lower limit of 34 km/h for the longitudinal velocity of the trailing unit **110-2** may be set, which will lead to stretch braking.

In another example, the upper and/or lower limit is determined based on a side slip angle of the unit **110.** Proper grip and/or stability cannot be maintained in some scenarios if the vehicle combination **100** brakes or propels excessively, as most/all of the force capability is spent for longitudinal forces and there may not be enough lateral force capability available. Therefore, in cases where the side (lateral) slip angle is higher, a longitudinal velocity and/or slip limit can ensure sufficient lateral force capability. The control parameter for a particular unit **110** can therefore be limited as a function of the side slip angle of the unit **110.** The combination control allocator **210** can then centrally coordinate the longitudinal velocity and/or slip limits for the individual units **110** on a combination level. For example, for a side slip angle of 2°, it may be desired to limit the longitudinal slip with a margin of 10%. If a longitudinal velocity of 40 km/h is acquired at **402,** an upper limit of 44 km/h and a lower limit of 36 km/h will provide the desired 10% slip limits. The concept of controlling longitudinal slip based on a side slip angle is discussed further in detail in PCT application no. PCT/EP2023/075963 filed on 20 September 2023 in the name of Volvo Truck Corporation.

At **406,** the upper limit and/or lower limit *limᵢ* for the control parameter for at least one unit **110** is transmitted to a controller of the unit **110,** for example the respective unit control allocator **212.** The unit control allocators **212** can then control the actuators accordingly. For example, the unit control allocators **212** may determine actuator-specific allocated control inputs *uₖ* based on the upper limit and/or lower limit for the control parameter, as discussed above. This may also be performed based on the actuator capabilities *u*_{*k*,*cap*} received by the unit-specific control allocators **212** from the respective actuators.

If the limits are rather generous, then they will not tangibly limit or restrict the motion requested in the requested combination control input _{*νcomb*,}*_{req}.* For example in a normal driving case (e.g. on asphalt, flat slope, straight line, low or medium force requests), a 10% margin can be applied to the longitudinal velocity acquired at **402** to provide upper and lower limits. For example, for a longitudinal velocity of 40 km/h, upper and lower limits for the longitudinal velocity of the unit **110** will be 44 km/h and 36 km/h respectively. In normal driving, the vehicle combination **100** will not reach these limits and the force requests will be fulfilled.

In a case where it is desired to ensure stability of the vehicle combination **100,** the limits may be somewhat more restrictive. In particular, a lower set of limits may be set. For example, if it is determined that a unit **110** is about to roll over and a longitudinal velocity of 40 km/h is acquired at **402,** an upper limit of 35 km/h and a lower limit of 30 km/h for the longitudinal velocity of the unit **110** may be set, which will eventually lead the unit **110** to brake. Due to braking, the lateral acceleration of the unit **110** will decrease and roll-over will be avoided. It should be noted that sending a lower limit for the longitudinal velocity of the unit **110** that is too low may cause the wheels to have deep slip, resulting in a loss of traction, saturating the wheel forces, reducing the lateral forces, and eventually leading to avoid roll-over.

At **408,** an upper and/or lower capability for the control parameter may be received. For example, a unit control allocator **212** may send unit capabilities *u*_{*i*,*cap*} to the combination control allocator **210,** as discussed above. In particular, the unit capabilities *u*_{*i*,*cap*} may include capabilities of a longitudinal slip associated with the unit **110,** a longitudinal velocity associated with the unit **110,** and/or a rotational speed of an electrical machine **120** associated with the unit **110.**

At **410,** a measured longitudinal velocity for at least one unit **110** may be received. For example, a unit control allocator **212** may send a unit status message *u*_{*i*,*stat*} to the combination control allocator **210,** as discussed above. In particular, the unit status message *u*_{*i*,*stat*} may include a measured longitudinal velocity associated with the unit **110.**

At **412,** a previously set upper and/or a lower limit for at least one unit **110** may be received. For example, a unit control allocator **212** may send a previously set upper and/or a lower limit *limᵢ(t-1)* to the combination control allocator **210,** as discussed above. In this way, the combination control allocator **210** may receive information as to whether limits it has preciously sent to the unit control allocators **212** have been properly implemented.

The steps of the method **400** need not be performed in the exact order shown in **FIG. 4****.** In one example, a unit control allocator **212** may send unit capabilities *u*_{*i*,*cap*} to the combination control allocator **210,** e.g. 40 km/h for a lower capability of the longitudinal velocity associated with the unit **110** , and 70 km/h for an upper capability of the longitudinal velocity associated with the unit **110.** Based on these capabilities, and an acquired longitudinal velocity of 55 km/h, the combination control allocator **210** may determine upper and lower limits for the longitudinal velocity associated with the unit **110** of 60 km/h and 50 km/h respectively. These limits may be set by the unit control allocator **212,** which may then send a feedback message to the combination control allocator **210** confirming the limits have been set appropriately (or not).

Whilst the method **400** is generally discussed in terms of the communication between a combination control allocator **210** and a single unit **110,** it will be appreciated that the method can be applied for one, multiple, or all of the units **110** in a vehicle combination **100.** This enables different limits to be set for different units, which may be advantageous in some particular scenarios. For example, by reducing speed limit for a trailing unit to a lower value than its actual speed, trailer roll-over can be avoided. Furthermore, an upper limit for the longitudinal velocity of a trailing unit can be set lower than that of the tractor unit, which enables stretch braking to be performed. Furthermore, different units **110** may have different side slip angles. A unit **110** exhibiting higher side slip should have tighter slip or speed limits, which can be achieved using the method **400.**

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networke d) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to certain examples, there is also disclosed:
Example 1: A computer system (200, 210, 500) comprising processing circuitry (502) configured to: acquire a longitudinal velocity of a vehicle combination (100); determine an upper limit and/or a lower limit for a control parameter for at least one unit (110) of the vehicle combination (100) based on the acquired longitudinal velocity; and transmit the upper and/or lower limit to a controller (212) of the at least one unit (110) of the vehicle combination (100).
Example 2: The computer system (200, 210, 500) of example 1, wherein the acquired longitudinal velocity is the longitudinal velocity of the tractor unit (110-1) of the vehicle combination (100).
Example 3: The computer system (200, 210, 500) of example 1 or 2, wherein the control parameter comprises a longitudinal slip associated with the at least one unit (110), a longitudinal velocity associated with the at least one unit (110), and/or a rotational speed of an electrical machine associated with the at least one unit (110).
Example 4: The computer system (200, 210, 500) of any preceding example, wherein the processing circuitry (502) is configured to determine the upper and/or lower limit based on a roll-over prevention operation for the vehicle combination (100).
Example 5: The computer system (200, 210, 500) of any preceding example, wherein the processing circuitry (502) is configured to determine the upper and/or lower limit based on a stretch braking operation for the vehicle combination (100).
Example 6: The computer system (200, 210, 500) of example 4 or 5, wherein the control parameter comprises a longitudinal velocity associated with the at least one unit (110), and an upper limit for longitudinal velocity is lower than the acquired longitudinal velocity.
Example 7: The computer system (200, 210, 500) of any preceding example, wherein the processing circuitry (502) is configured to determine the upper and/or lower limit based on a side slip angle of the at least one unit (110).
Example 8: The computer system (200, 210, 500) of any preceding example, wherein the processing circuitry (502) is further configured to receive an upper and/or lower capability for the control parameter for the at least one unit (110) of the vehicle combination (100) from the controller (212) of the at least one unit (110); and determine the upper limit and/or lower limit for the control parameter for the at least one unit (110) of the vehicle combination (100) based on the received capability.
Example 9: The computer system (200, 210, 500) of any preceding example, wherein the processing circuitry (502) is further configured to receive a measured longitudinal velocity for the at least one unit (110) of the vehicle combination (110) from the controller (212) of the at least one unit (110).
Example 10: The computer system (200, 210, 500) of any preceding example, wherein the processing circuitry (502) is further configured to receive a previously set upper and/or lower limit for the control parameter from the controller (212) of the at least one unit (110).
Example 11: The computer system (200, 210, 500) of any preceding example, wherein the controller (212) of the at least one unit (110) of the vehicle combination (110) is configured to transmit an upper and/or lower limit for an actuator control parameter to one or more actuators (120, 150) of the at least one unit (110) based on the upper and/or lower limit for the control parameter of the unit (110).
Example 12: A vehicle (100) comprising the computer system (200, 210, 500) of any preceding example.
Example 13: A computer-implemented method (400) comprising: acquiring (402), by processing circuitry (502) of a computer system (200, 210, 500), a longitudinal velocity of a vehicle combination (100); determining (404), by the processing circuitry (502), an upper limit and/or a lower limit for a control parameter for at least one unit (110) of the vehicle combination (100) based on the acquired longitudinal velocity; and transmitting (406), by the processing circuitry (502), the upper and/or lower limit to a controller (212) of the at least one unit (110).
Example 14: The computer-implemented method (400) of example 13, wherein the acquired longitudinal velocity is the longitudinal velocity of the tractor unit (110-1) of the vehicle combination (100).
Example 15: The computer-implemented method (400) of example 13 or 14, wherein the control parameter comprises a longitudinal slip associated with the at least one unit (110), a longitudinal velocity associated with the at least one unit (110), and/or a rotational speed of an electrical machine associated with the at least one unit (110).
Example 16: The computer-implemented method (400) of any of examples 13 to 15, comprising determining the upper and/or lower limit based on a roll-over prevention operation for the vehicle combination (100).
Example 17: The computer-implemented method (400) of any of examples 13 to 16, comprising determining the upper and/or lower limit based on a stretch braking operation for the vehicle combination (100).
Example 18: The computer-implemented method (400) of example 16 or 17, wherein the control parameter comprises a longitudinal velocity associated with the at least one unit (110), and an upper limit for longitudinal velocity is lower than the acquired longitudinal velocity.
Example 19: The computer-implemented method (400) of any of examples 13 to 18, comprising determining the upper and/or lower limit based on a side slip angle of the at least one unit (110).
Example 20: The computer-implemented method (400) of any of examples 13 to 19, further comprising receiving an upper and/or lower capability for the control parameter for the at least one unit (110) of the vehicle combination (100) from the controller (212) of the at least one unit (110); and determining the upper limit and/or lower limit for the control parameter for the at least one unit (110) of the vehicle combination (100) based on the received capability.
Example 21: The computer-implemented method (400) of any of examples 13 to 20, further comprising receiving a measured longitudinal velocity for the at least one unit (110) of the vehicle combination (110) from the controller (212) of the at least one unit (110).
Example 22: The computer-implemented method (400) of any of examples 13 to 21, further comprising receiving a previously set upper and/or lower limit for the control parameter from the controller (212) of the at least one unit (110).
Example 23: The computer-implemented method (400) of any of examples 13 to 22, wherein the controller (212) of the at least one unit (110) of the vehicle combination (110) is configured to transmit an upper and/or lower limit for an actuator control parameter to one or more actuators (120, 150) of the at least one unit (110) based on the upper and/or lower limit for the control parameter of the unit (110).
Example 24: A computer program product comprising program code for performing, when executed by processing circuitry (502), the computer-implemented method (400) of any of examples 13 to 23.
Example 25: A non-transitory computer-readable storage medium comprising instructions, which when executed by processing circuitry (502), cause the processing circuitry to perform the computer-implemented method (400) of any of examples 13 to 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (200, 210, 500) comprising processing circuitry (502) configured to:
acquire a longitudinal velocity of a vehicle combination (100);
determine an upper limit and/or a lower limit for a control parameter for at least one unit (110) of the vehicle combination (100) based on the acquired longitudinal velocity; and
transmit the upper and/or lower limit to a controller (212) of the at least one unit (110) of the vehicle combination (100).

2. The computer system (200, 210, 500) of claim 1, wherein the acquired longitudinal velocity is the longitudinal velocity of the tractor unit (110-1) of the vehicle combination (100).

3. The computer system (200, 210, 500) of claim 1 or 2, wherein the control parameter comprises a longitudinal slip associated with the at least one unit (110), a longitudinal velocity associated with the at least one unit (110), and/or a rotational speed of an electrical machine associated with the at least one unit (110).

4. The computer system (200, 210, 500) of any preceding claim, wherein the processing circuitry (502) is configured to determine the upper and/or lower limit further based on a roll-over prevention operation for the vehicle combination (100).

5. The computer system (200, 210, 500) of any preceding claim, wherein the processing circuitry (502) is configured to determine the upper and/or lower limit further based on a stretch braking operation for the vehicle combination (100).

6. The computer system (200, 210, 500) of claim 4 or 5, wherein the control parameter comprises a longitudinal velocity associated with the at least one unit (110), and an upper limit for longitudinal velocity is lower than the acquired longitudinal velocity.

7. The computer system (200, 210, 500) of any preceding claim, wherein the processing circuitry (502) is configured to determine the upper and/or lower limit further based on a side slip angle of the at least one unit (110).

8. The computer system (200, 210, 500) of any preceding claim, wherein the processing circuitry (502) is further configured to:
receive an upper and/or lower capability for the control parameter for the at least one unit (110) of the vehicle combination (100) from the controller (212) of the at least one unit (110); and
determine the upper limit and/or lower limit for the control parameter for the at least one unit (110) of the vehicle combination (100) based on the received capability.

9. The computer system (200, 210, 500) of any preceding claim, wherein the processing circuitry (502) is further configured to receive a measured longitudinal velocity for the at least one unit (110) of the vehicle combination (110) from the controller (212) of the at least one unit (110).

10. The computer system (200, 210, 500) of any preceding claim, wherein the processing circuitry (502) is further configured to receive a previously set upper and/or lower limit for the control parameter from the controller (212) of the at least one unit (110).

11. The computer system (200, 210, 500) of any preceding claim, wherein the controller (212) of the at least one unit (110) of the vehicle combination (110) is configured to transmit an upper and/or lower limit for an actuator control parameter to one or more actuators (120, 150) of the at least one unit (110) based on the upper and/or lower limit for the control parameter of the unit (110).

12. A vehicle (100) comprising the computer system (200, 210, 500) of any preceding claim.

13. A computer-implemented method (400) comprising:
acquiring (402), by processing circuitry (502) of a computer system (200, 210, 500), a longitudinal velocity of a vehicle combination (100);
determining (404), by the processing circuitry (502), an upper limit and/or a lower limit for a control parameter for at least one unit (110) of the vehicle combination (100) based on the acquired longitudinal velocity; and
transmitting (406), by the processing circuitry (502), the upper and/or lower limit to a controller (212) of the at least one unit (110).

14. A computer program product comprising program code for performing, when executed by processing circuitry (502), the computer-implemented method (400) of claim 13.

15. A non-transitory computer-readable storage medium comprising instructions, which when executed by processing circuitry (502), cause the processing circuitry to perform the computer-implemented method (400) of claim 13.

## Amended claims

### Amended claims in accordance with Rule 137(2) EPC.

1. A computer system (200, 210, 500) comprising processing circuitry (502) configured to:
acquire a longitudinal velocity of a vehicle combination (100);
determine an upper limit and/or a lower limit for a rotational speed of an electrical machine (120) associated with at least one unit (110) of the vehicle combination (100) or a speed of a wheel (140) associated with the electrical machine (120) based on the acquired longitudinal velocity; and
transmit the upper and/or lower limit to a controller (212) of the at least one unit (110) of the vehicle combination (100).

2. The computer system (200, 210, 500) of claim 1, wherein the acquired longitudinal velocity is the longitudinal velocity of the tractor unit (110-1) of the vehicle combination (100).

3. The computer system (200, 210, 500) of any preceding claim, wherein the processing circuitry (502) is configured to determine the upper and/or lower limit further based on a roll-over prevention operation for the vehicle combination (100).

4. The computer system (200, 210, 500) of any preceding claim, wherein the processing circuitry (502) is configured to determine the upper and/or lower limit further based on a stretch braking operation for the vehicle combination (100).

5. The computer system (200, 210, 500) of any preceding claim, wherein the processing circuitry (502) is configured to determine the upper and/or lower limit further based on a side slip angle of the at least one unit (110).

6. The computer system (200, 210, 500) of any preceding claim, wherein the processing circuitry (502) is further configured to:
receive an upper and/or lower capability for the rotational speed of the electrical machine (120) or the speed of the wheel (140) associated with the electrical machine (120) from the controller (212) of the at least one unit (110); and
determine the upper limit and/or lower limit based on the received capability.

7. The computer system (200, 210, 500) of any preceding claim, wherein the processing circuitry (502) is further configured to receive a measured longitudinal velocity for the at least one unit (110) of the vehicle combination (110) from the controller (212) of the at least one unit (110).

8. The computer system (200, 210, 500) of any preceding claim, wherein the processing circuitry (502) is further configured to receive a previously set upper and/or lower limit for the rotational speed of the electrical machine (120) or the speed of the wheel (140) associated with the electrical machine (120) from the controller (212) of the at least one unit (110).

9. A vehicle (100) comprising the computer system (200, 210, 500) of any preceding claim.

10. A computer-implemented method (400) comprising:
acquiring (402), by processing circuitry (502) of a computer system (200, 210, 500), a longitudinal velocity of a vehicle combination (100);
determining (404), by the processing circuitry (502), an upper limit and/or a lower limit for a rotational speed of an electrical machine (120) associated with at least one unit (110) of the vehicle combination (100) or a speed of a wheel (140) associated with the electrical machine (120) based on the acquired longitudinal velocity; and
transmitting (406), by the processing circuitry (502), the upper and/or lower limit to a controller (212) of the at least one unit (110).

11. A computer program product comprising program code for performing, when executed by processing circuitry (502), the computer-implemented method (400) of claim 10.

12. A non-transitory computer-readable storage medium comprising instructions, which when executed by processing circuitry (502), cause the processing circuitry to perform the computer-implemented method (400) of claim 10.
